# EUROPEAN PATENT APPLICATION

(11) **EP 4 622 064 A1**
(43) Date of publication of application: **24.09.2025**
(21) Application number: 25156020.7
(22) Date of filing: 05.02.2025
(51) Int. Cl.: H02K 1/24, H02K 1/2746, H02K 1/276, H02K 15/03, H02K 15/121, H02K 21/16

(54) **SYNCHRONOUS RELUCTANCE MOTOR HAVING A FERRITE ASSISTED RELUCTANCE ROTOR**

(30) Priority: 09.02.2024 US 202463551632 P; 29.01.2025 US 202519040540
(71) Applicant: GHSP, INC., Holland, MI 49423 (US)
(72) Inventor: Ridge, Larry Duane, Holland, 49423 (US); He, Jian Peng, Holland, 49423 (US); McMackin, Nathaniel Joseph, Holland, 49423 (US); Stewart, Cathy Ann, Holland, 49423 (US); Mitteer, David Michael, Holland, 49423 (US); Even, Andrew Kevin, Holland, 49423 (US)
(74) Representative: Hepworth Browne

(57) **Abstract**

A motor (12) includes a stator (10) having a winding (14) that when selectively energized produces an electromagnetic field (164) within a rotor cavity (74), and a rotor (18) disposed within the rotor cavity (74) of the stator (10) and in electromagnetic communication with the winding (14) and the electromagnetic field (164). The rotor (18) includes a drive shaft (228), a rotor body (140) that extends around the drive shaft (228) and that defines a plurality of reluctance voids (122), and magnet inserts (162) that are disposed within the reluctance voids (122). The magnet inserts (162) occupy at least a portion of a space defined by the reluctance voids (122). The magnet inserts (162) and the reluctance voids (122) cooperate with the electromagnetic field (164) to produce an electromagnetic torque (170).

## Description

### FIELD OF THE INVENTION

The present invention generally relates to electric motors, and more specifically, a synchronous reluctance rotor having a series of stacked rotor laminations that are coupled together to form reluctance voids, and where permanent magnet inserts are disposed within the reluctance voids to form a rotor that produces a reluctance torque as well as a magnetic torque when acted upon by an electromagnetic field from a stator.

### BACKGROUND OF THE INVENTION

Electric motors typically include a stator and a rotor, where the stator includes a winding that can be energized to form an electromagnetic field that interacts with a rotor. The interaction between the electromagnetic field of the stator and the rotor produces an electromotive force that rotates the rotor relative to the stator.

### SUMMARY OF THE INVENTION

According to an aspect of the present disclosure, a motor includes a stator having a winding that when selectively energized produces an electromagnetic field within a rotor cavity, and a rotor disposed within the rotor cavity of the stator and in electromagnetic communication with the winding and the electromagnetic field. The rotor includes a drive shaft, a rotor body that extends around the drive shaft and that defines a plurality of reluctance voids, and magnet inserts that are disposed within the reluctance voids. The magnet inserts occupy at least a portion of a space defined by the reluctance voids. The magnet inserts and the reluctance voids cooperate with the electromagnetic field to produce an electromagnetic torque.

According to another aspect, a rotor includes a drive shaft and a plurality of stacked rotor laminations that form a rotor body. The rotor body extends around the drive shaft. Each stacked rotor lamination has connecting webs that form reluctance voids within the plurality of stacked rotor laminations. The rotor further includes magnet inserts that are disposed within the reluctance voids. The magnet inserts occupy at least a portion of a space defined by the reluctance voids. The magnet inserts and the reluctance voids are configured to cooperate with an electromagnetic field from a stator winding to produce an electromagnetic torque having a reluctance torque component and a magnetic torque component.

According to another aspect, a method for forming a rotor for an electric motor includes the steps of forming rotor laminations having reluctance portions removed from each of the rotor laminations to define connecting webs, stacking the rotor laminations to form a rotor body, wherein the connecting webs are aligned to define reluctance voids within the rotor body, positioning magnet inserts within the reluctance voids, disposing opposing end caps on the rotor body to enclose the reluctance voids, and overmolding the rotor body with an overmold material. The opposing end caps prevent infiltration of the overmold material into the reluctance voids.

These and other aspects, objects, and features of the present disclosure will be understood and appreciated by those skilled in the art upon studying the following specification, claims, and appended drawings.

### BRIEF DESCRIPTION OF THE DRAWINGS

In the drawings:
FIG. 1 is a perspective view of an electric motor that incorporates an aspect of the stator and rotor configurations described herein;
FIG. 2 is a schematic cross-sectional view of the electric motor of FIG. 1, taken along line II-II;
FIG. 3 is a perspective view of a stator that incorporates an outer ring positioned around an outer circumference of teeth for a stator;
FIG. 4 is a partially exploded perspective view of the stator of FIG. 3, with the stator separated from an overmold;
FIG. 5 is an exploded perspective view of the stator of FIG. 4;
FIG. 6 is a schematic perspective view showing assembly of the stator teeth for the stator of FIG. 5 using the structural ring and stacked tooth laminations;
FIG. 7 is a top perspective view of the stator core of the stator of FIG. 5 is a side perspective view of a stack of tooth laminations that are positioned between adjacent structural rings for forming the stator of FIG. 2;
FIG. 8 is an exploded perspective view of the stator core of FIG. 7;
FIG. 9 is a schematic diagram illustrating assembly of the stator teeth of the stator core using structural rings and stacked tooth laminations;
FIG. 10 is a partially exploded view of a stator that incorporates a plurality of pre-wound tooth segments and showing the stator separated from an overmold;
FIG. 11 is an exploded perspective view of the stator of FIG. 10;
FIG. 12 is an exploded perspective view of the stator core shown in FIG. 11;
FIG. 13 is a perspective view of a pre-wound tooth segment of the stator of FIG. 10;
FIG. 14 is an exploded perspective view of the pre-wound tooth segment of FIG. 13;
FIG. 15 is a perspective view of a rotor that incorporated reluctance voids within a rotor body;
FIG. 16 is an exploded perspective view of the rotor of FIG. 15;
FIG. 17 Is a cross sectional view of the stator of FIG. 15 taken along XVII-XVII;
FIG. 18 is a cross sectional view of the stator of FIG. 15 taken along XVIII-XVIII;
FIG. 19 is a schematic flow diagram illustrating a method for forming a stator for an electric motor;
FIG. 20 is a schematic flow diagram illustrating a method for forming a stator for an electric motor;
FIG. 21 is a schematic flow diagram illustrating a method for forming a stator for an electric motor;
FIG. 22 is a perspective view of a rotor that incorporates magnet inserts within reluctance voids of a rotor body;
FIG. 23 is an exploded perspective view of a rotor of FIG. 22;
FIG. 24 is a cross-sectional view of the rotor of FIG. 22 taken along the line XXIV-XXIV;
FIG. 25 is a cross-sectional view of the rotor of FIG. 22 taken along the line XXV-XXV;
FIG. 26 is a schematic cross-sectional view of a stator and rotor combination including an aspect of the rotor having linear reluctance voids in a two-pole rotor configuration;
FIG. 27 is a schematic diagram of the rotor and stator combination of FIG. 26 and showing a portion of the reluctance voids filled with magnet inserts;
FIG. 28 is a schematic cross-sectional view of the stator and rotor combination of FIG. 27 and showing additional magnet inserts disposed within the reluctance voids;
FIG. 29 is a schematic cross-sectional view of a stator and rotor combination showing a four-pole configuration of the ferrite-assisted reluctance rotor;
FIG. 30 is a schematic diagram illustrating an exemplary configuration of the magnet inserts disposed within the reluctance voids to produce a desired proportion of the magnetic torque component and the reluctance torque component;
FIG. 31 is a schematic diagram illustrating another exemplary configuration of the magnet inserts disposed within the reluctance voids to produce a desired proportion of the magnetic torque component and the reluctance torque component;
FIG. 32 is a schematic diagram illustrating another exemplary configuration of the magnet inserts disposed within the reluctance voids to produce a desired proportion of the magnetic torque component and the reluctance torque component;
FIG. 33 is a schematic cross-sectional view of a ferrite-assisted reluctance rotor having the reluctance voids entirely occupied by the magnet inserts;
FIG. 34 is a schematic cross-sectional view of a stator and rotor combination including an aspect of the ferrite-assisted reluctance rotor having a single cavity corresponding to each rotor pole; and
FIG. 35 is a schematic flow diagram illustrating a method for forming a rotor for an electric motor.

### DETAILED DESCRIPTION OF THE PREFERRED EMBODIMENTS

As required, detailed embodiments of the present disclosure are disclosed herein; however, it is to be understood that the disclosed embodiments are merely exemplary of the invention that may be embodied in various and alternative forms. The figures are not necessarily to a detailed design; some schematics may be exaggerated or minimized to show function overview. Therefore, specific structural and functional details disclosed herein are not to be interpreted as limiting, but merely as a representative basis for teaching one skilled in the art to variously employ the present invention.

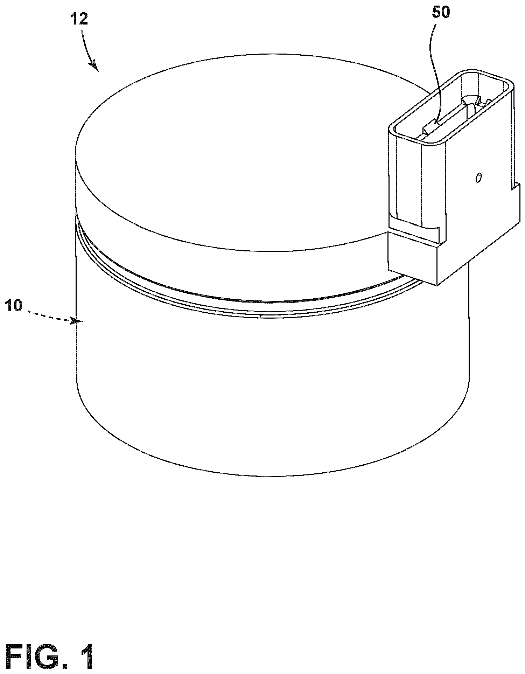

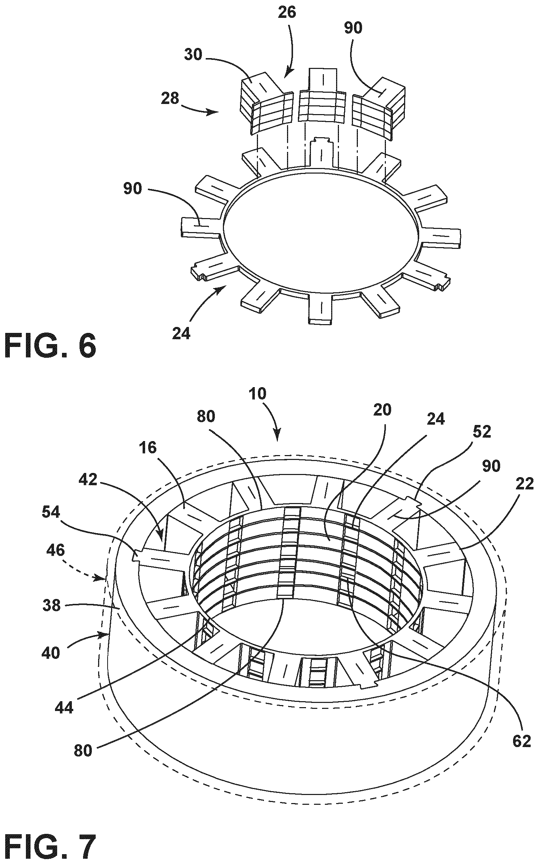

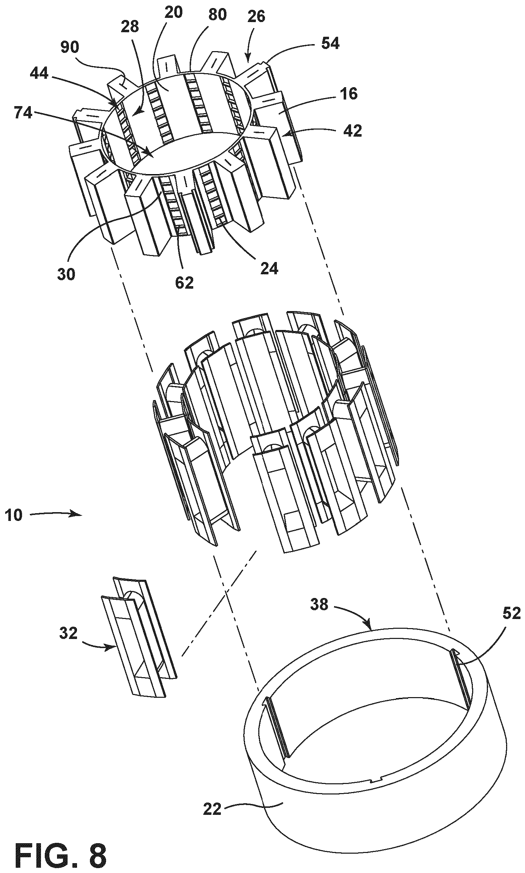

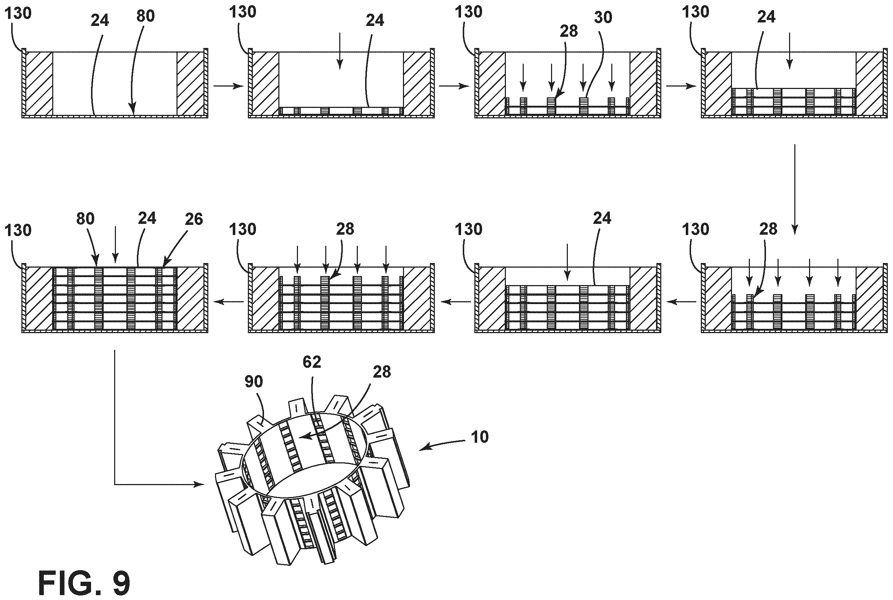

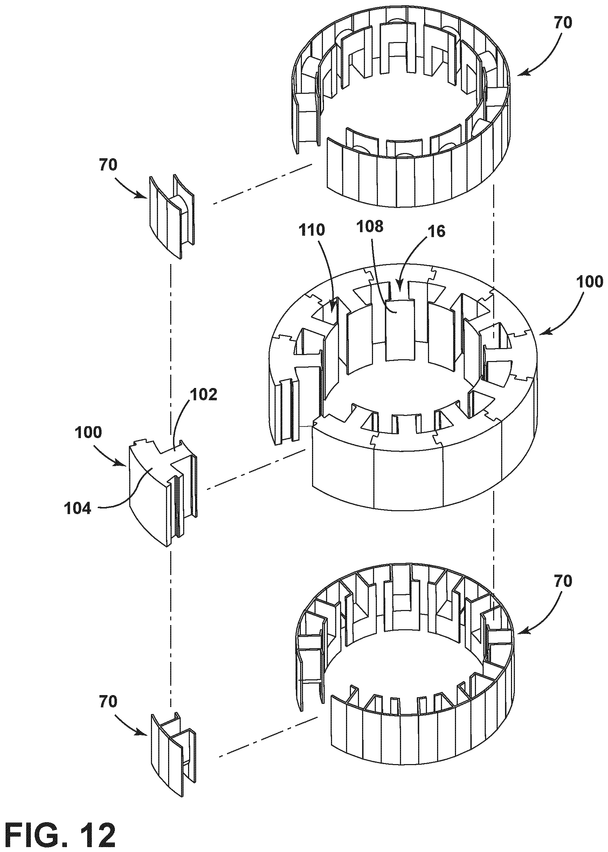

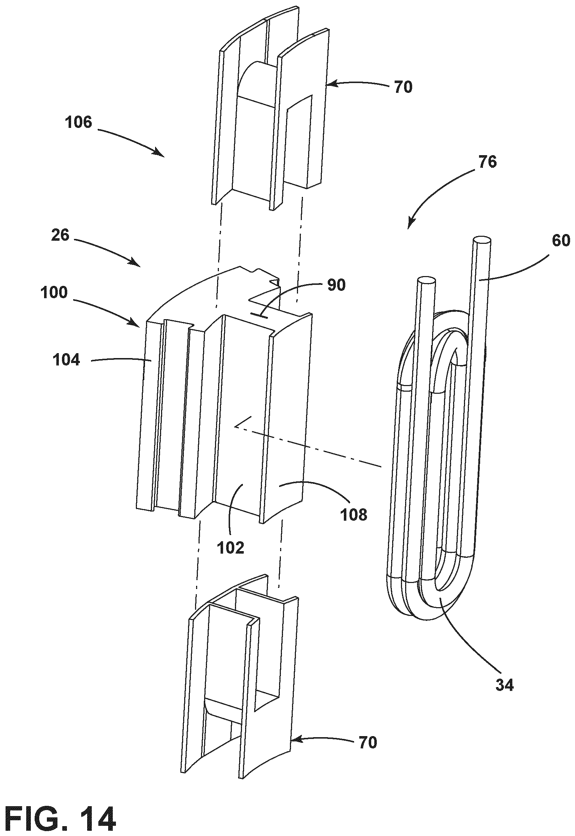

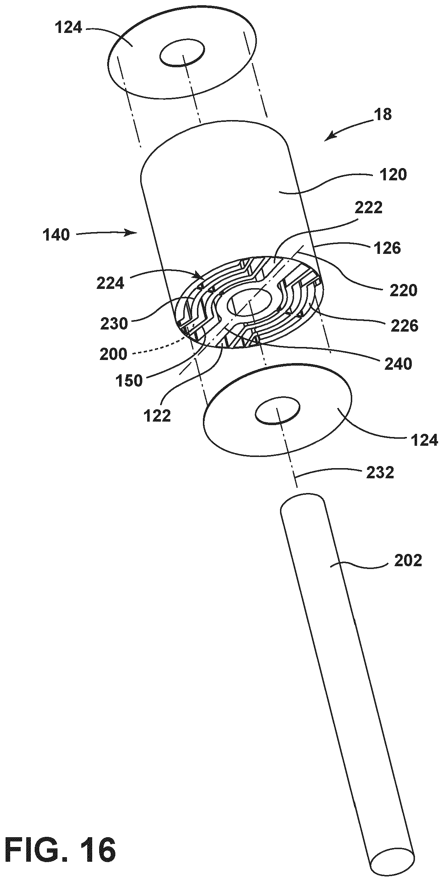

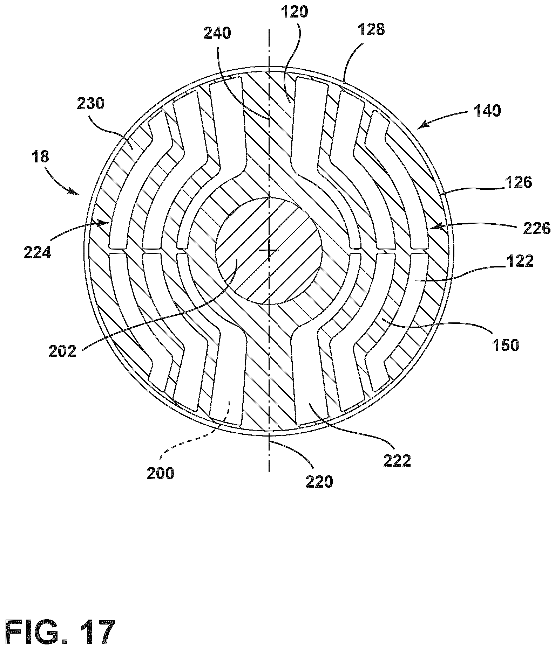

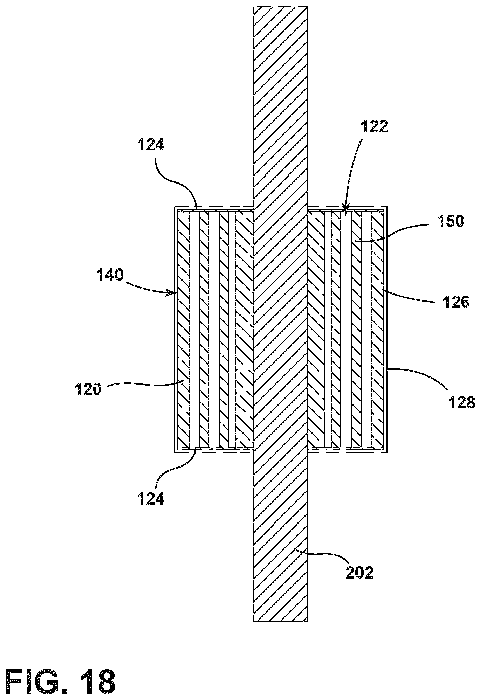

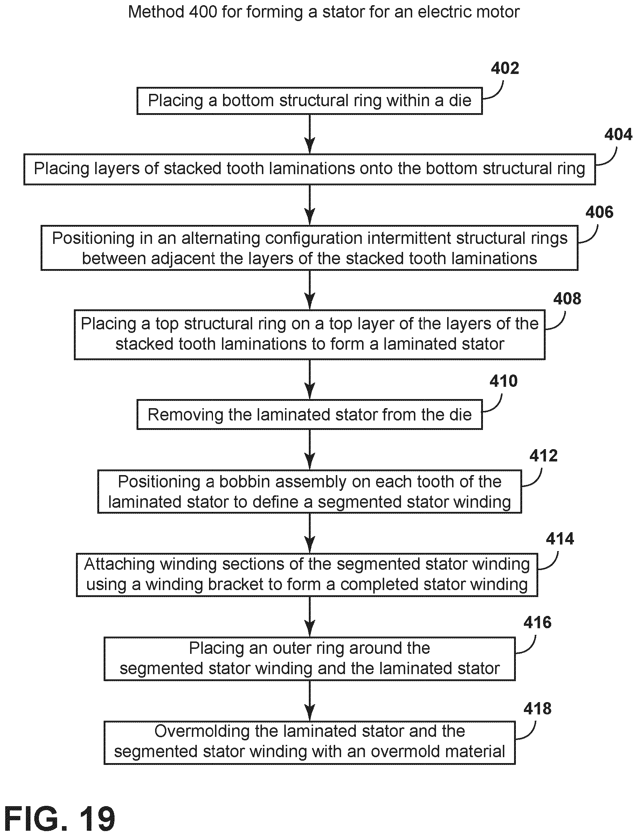

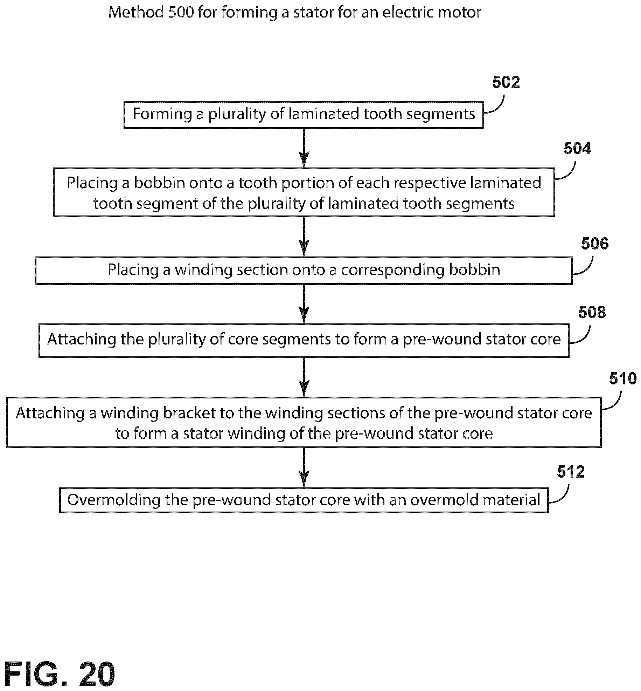

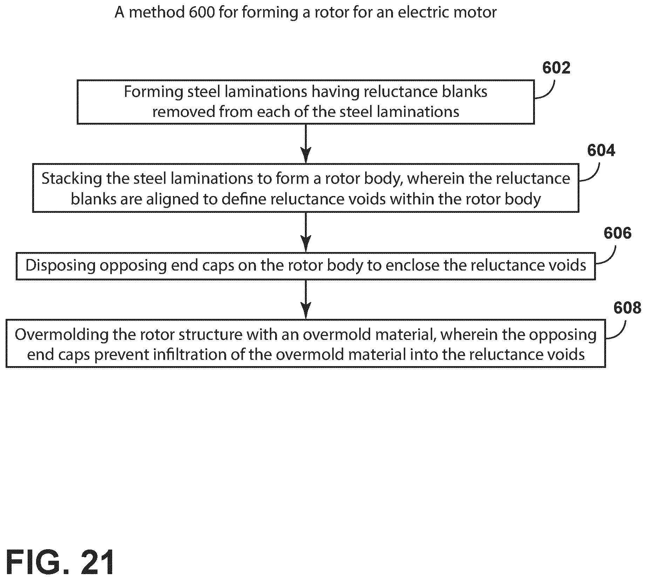

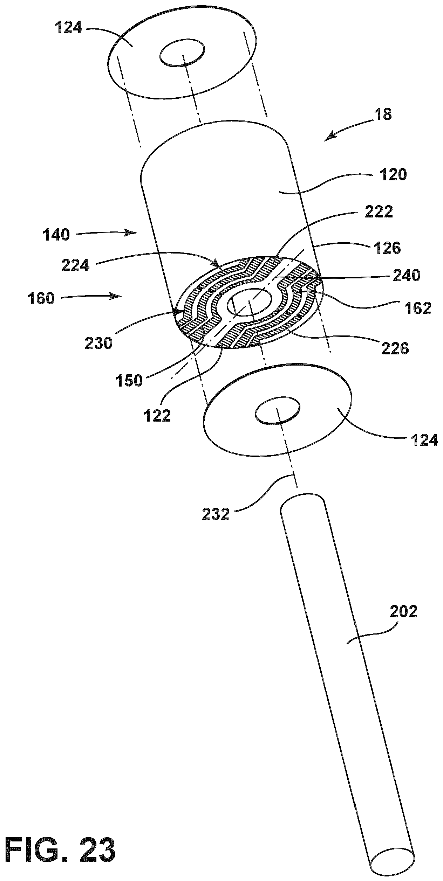

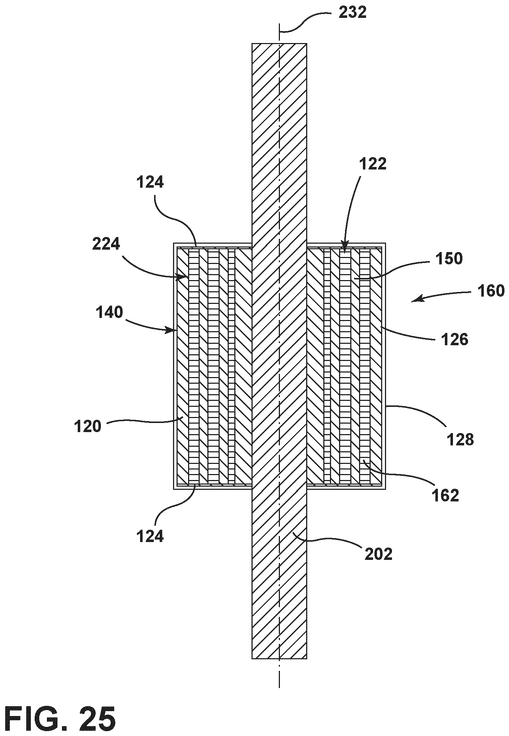

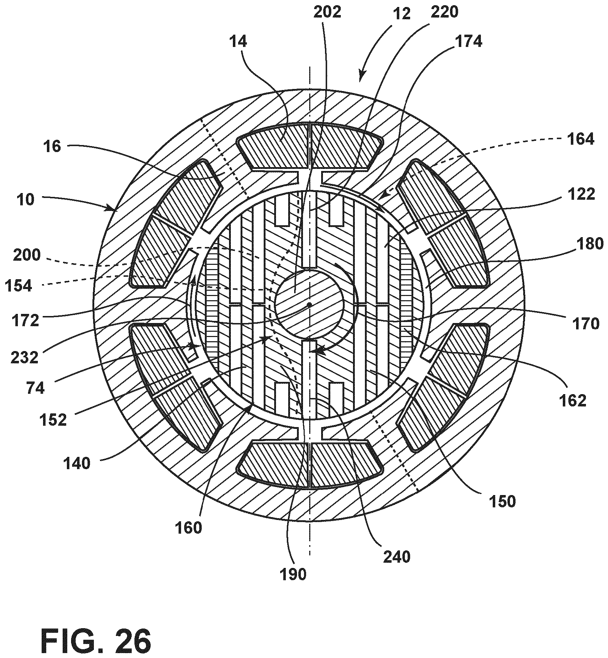

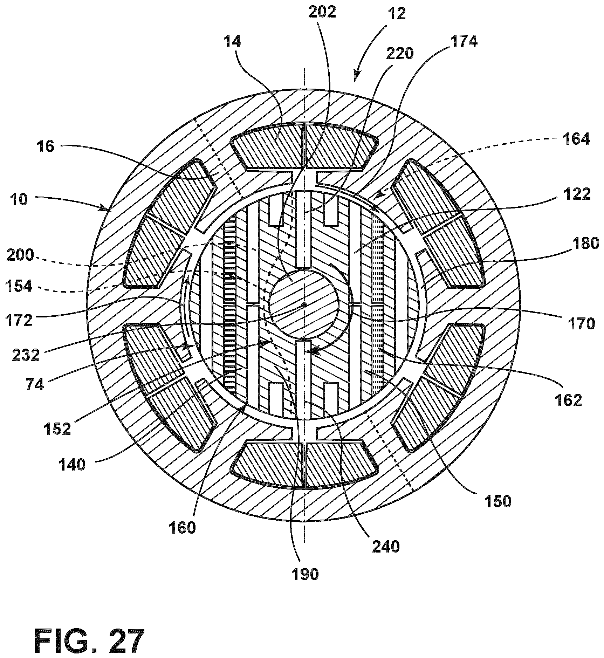

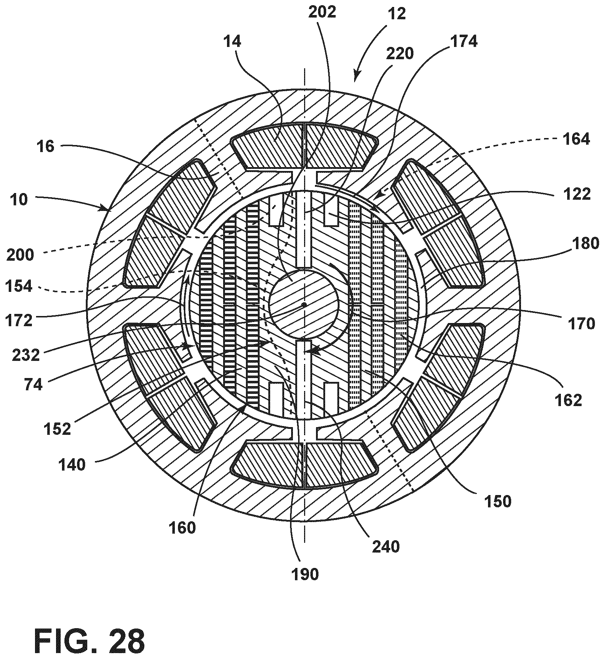

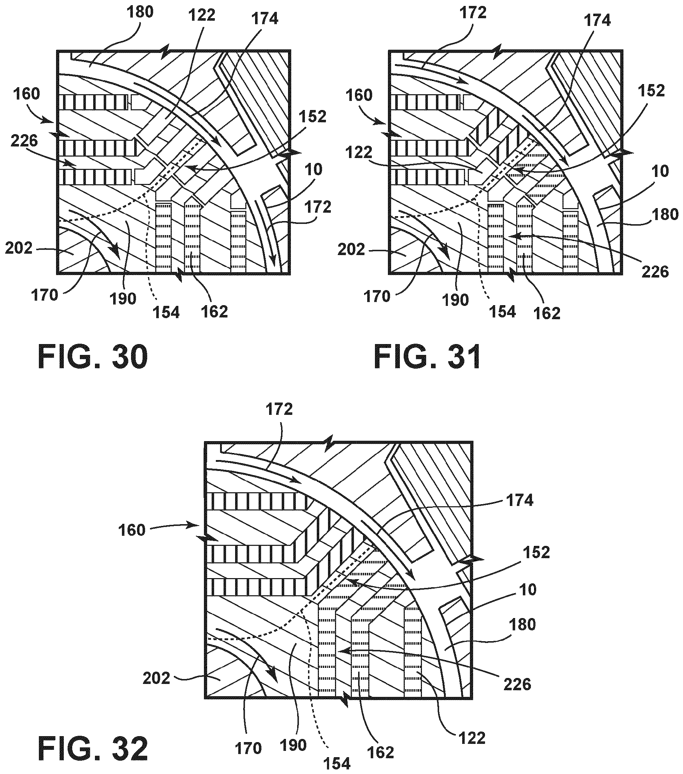

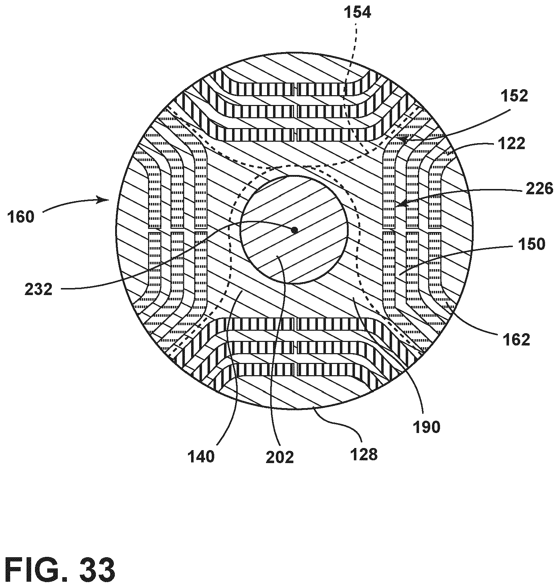

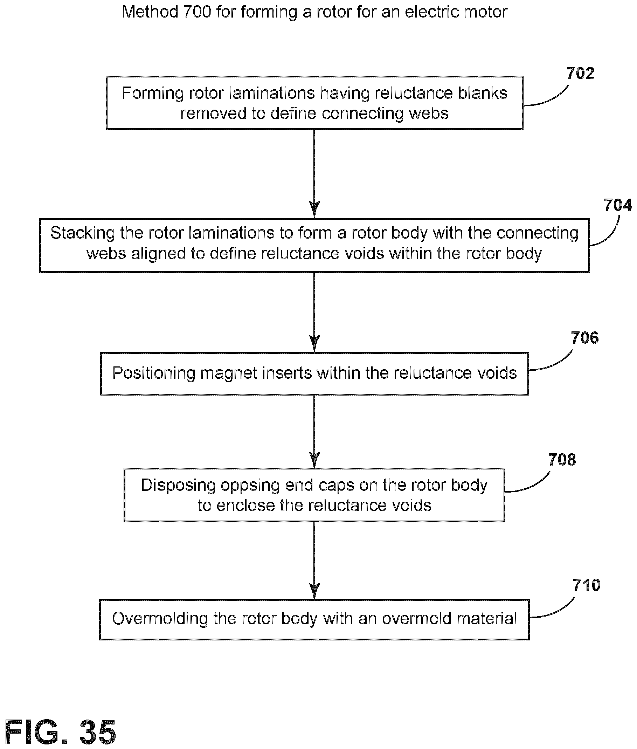

For purposes of description herein, the terms "upper," "lower," "right," "left," "rear," "front," "vertical," "horizontal," and derivatives thereof shall relate to the concepts as oriented in FIGS. 1-35. However, it is to be understood that the concepts may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The present illustrated embodiments reside primarily in combinations of method steps and apparatus components related to an electric motor having a formed and overmolded stator with pre-wound winding sections that are attached to the teeth of the stator and an overmolded rotor that includes reluctance voids that are contained between outer laminations and that are at least partially filled with magnet inserts. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

As used herein, the term "and/or," when used in a list of two or more items, means that any one of the listed items can be employed by itself, or any combination of two or more of the listed items, can be employed. For example, if a composition is described as containing components A, B, and/or C, the composition can contain A alone; B alone; C alone; A and B in combination; A and C in combination; B and C in combination; or A, B, and C in combination.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ... a" does not, without more constraints, preclude the existence of additional identical elements in the process, method, article, or apparatus that comprises the element.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other, such as within about 5% of each other, or within about 2% of each other.

As used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

Referring now to FIGS. 1-35, reference numeral 10 generally refers to a stator 10 that is incorporated within an electric motor 12, where the stator 10 includes one or more windings 14 that are positioned on teeth 16 for the stator 10. The windings 14 are energized to produce a magnetic field that rotates a rotor 18 that is positioned relative to the stator 10. The windings 14 are typically energized by a controller that manages the delivery of an electrical current to the one or more phases of the winding 14. The rotor 18 can be positioned within an inner circumference 20 of the stator 10 or can be positioned outside of the outer circumference 22 of the stator 10 depending upon the configuration of the electric motor 12. Typically, the configurations described herein are directed to a rotor 18 that rotates within the inner circumference 20 of the stator 10. Accordingly, the configurations described herein are directed to devices and methods for building a stator 10 and positioning a winding 14 for the stator 10 on an inner-rotor configuration motor 12.

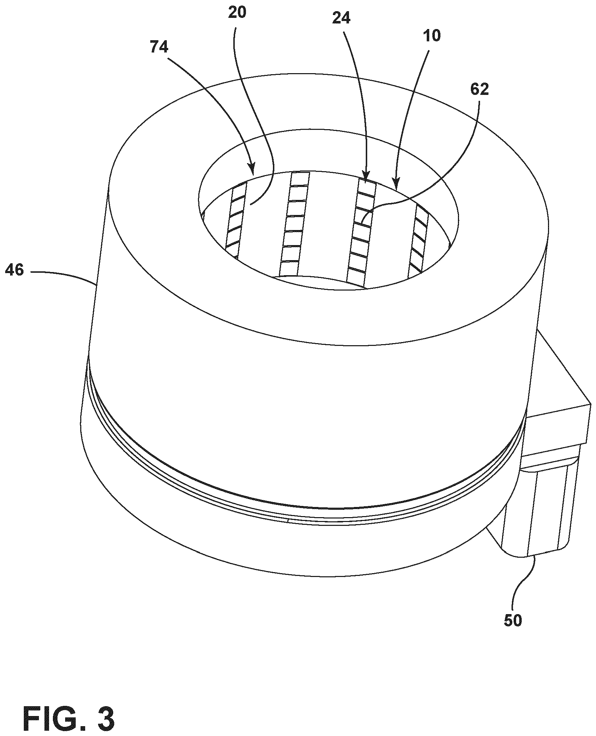

Referring now to FIGS. 3-9, the motor 12 includes a stator 10 that is made up of a plurality of structural rings 24 that can define a number of stator teeth 16 that are included within the stator 10. Tooth sections 26 are made up of stacks 28 of tooth laminations 30. The stacks 28 of tooth laminations 30 are positioned within each tooth 16 and between adjacent structural rings 24. Accordingly, each stator tooth 16 of the stator 10 is made up of an alternating configuration of structural rings 24 and stacks 28 of tooth laminations 30 that cooperate to form the stator teeth 16. Bobbins 32 are positioned around a portion of each tooth 16 for the stator 10. Winding sections 34 of electrically conducting material are slidably positioned over the bobbins 32, respectively, for each tooth 16 of the stator 10. At this point the winding sections 34 are separated from one another as they are installed onto the plurality of stator teeth, respectively. The winding sections 34 are coupled together to define a continuous winding 14 for the stator 10 that forms a plurality of stator poles 36 that are configured to be selectively energized to produce an electromagnetic field.

An outer ring 38 is positioned around the outer circumference 22 of the teeth 16 for the stator 10. The outer ring 38 operates as a back iron 40 and also serves to contain the winding sections 34 within a stator cavity 42. This stator cavity 42 is defined within the outer ring 38 and outside of the connecting portions 62 of the structural rings 24 that extend radially between adjacent stator teeth 16. Stated another way, the stator cavity 42 is defined within the outer ring 38 and outside of a core 44 for the stator 10 from which the teeth 16 of the stator 10 extends, where the core 44 is made up of the connecting portions of the structural rings 24. An overmold 46 extends around the outer ring 38, the winding sections 34, the plurality of teeth 16, and the core 44 to form an overmolded stator 10. In certain aspects of the device, the outer ring 38 can include alignment channels 52 that interact with alignment protrusions 54 of the tooth sections 26 that are made up of the structural rings 24 and the stacks of tooth laminations 30. In this manner, the outer ring 38 can be aligned in one or more desired orientations with respect to the tooth sections 26 of the stator 10. This can also be used as a securing device to ensure a secure fit between the outer ring 38 and the tooth sections 26 that form the stator cavity 42 that secured the winding sections 34.

In certain aspects of the device, as exemplified in FIGS. 3-9, the winding sections 34 can be connected together using a bus ring 48. This bus ring 48 includes a plurality of connectors 50 that link particular winding sections 34 together. The connectors 50 attach to the wire ends 60 of the winding sections 34 to complete the winding 14. Certain wire ends 60 are not attached to the connectors 50 so that they can be attached to the wiring for delivering current through the winding 14. These wire ends 60 that are not connected to the connectors 50 of the bus ring 48 can be positioned to extend out from the overmold 46 to connect with the electrical leads to and from the power source. The winding sections 34 are coupled together by the bus ring 48 that defines subsets 64 of the winding sections 34. These subsets 64 form the various phases of the winding 14 that are in electrical communication with one another. The bus ring 48 includes a plurality of winding connections 72 that form the subsets 64 of the winding sections 34. Again, the subsets 64 of the winding sections 34 correspond to phases of the plurality of stator poles 36. By way of example, and not limitation, the plurality of winding connections 72 can include three winding connections that correspond to three phases of the plurality of stator poles 36. The winding connections 72 of the bus ring 48, to define the various phases, are typically separated by an insulating spacer 82 that electrically separates the winding connections 72. The insulating spacers 82 provide for the delivery of dedicated and separate electrical currents to the subsets 64 of winding sections 34 to produce the multi-phase operation of the stator 10.

Through this configuration, the stator 10, being an inner-rotor configuration, is able to be wound from the outer circumference 22 before the outer ring 38 is placed around the winding sections 34. The outer ring 38 can then be placed around the stator 10 to contain the winding sections 34 on the teeth 16 of the stator 10. This configuration allows the inner-rotor configuration of the stator 10 to be manufactured, without the need to locate the windings 14 within the confined space inside the rotor cavity 74 of the stator 10. Additionally, the windings 14 can be applied as the pre-wound winding sections 34, as is described more fully herein.

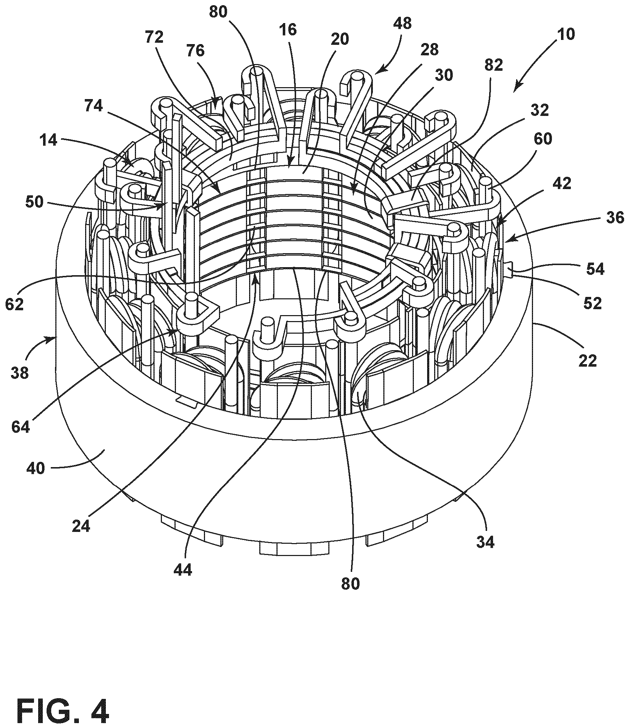

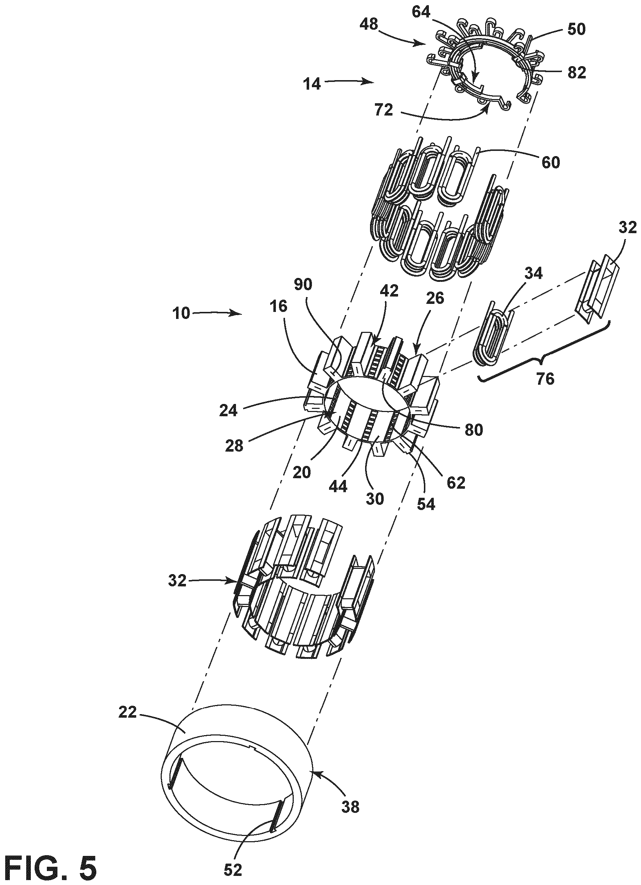

According to the various aspects of the device, as exemplified in FIGS. 4 and 5, the winding sections 34 that are slidably positioned over each bobbin 32 and over each tooth 16 for the stator 10 can be pre-wound as a formed winding section 34. Each winding section 34 is then placed over a bobbin 32 for a respective tooth 16 of the stator 10. In certain aspects of the device, the winding section 34 can be placed on the bobbin 32 and the bobbin 32, having the winding section 34 thereon, can be placed on the respective tooth 16 of the stator 10. Accordingly, the winding section 34 and the corresponding bobbin 32 member form a bobbin assembly 76 that is placed, as a single component, over a corresponding stator tooth 16. Using this configuration, a plurality of winding sections 34 and a plurality of bobbins 32 can be pre-manufactured and paired for installation on the stator teeth 16. Wire ends 60 extend from each winding section 34 can be connected to the adjacent winding sections 34 to form one or more continuous windings 14 that extend around the stator 10. After the winding sections 34 are connected together to form the continuous winding or windings 14, the overmold 46 is defined by placing an overmold material over the components to form the now insulated stator 10.

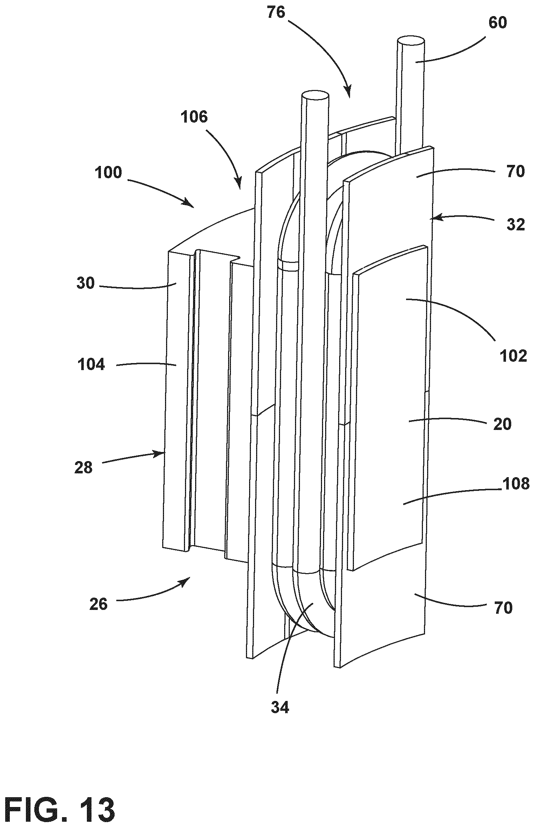

As exemplified in FIGS. 3-9, the various bobbins 32 that extend over the teeth 16 for the stator 10 can be formed by one or more bobbin sections 70 or end caps that are slidably positioned over each tooth 16 having an enlarged tooth end 108. As exemplified in FIGS. 13-14, in various aspects of the device, the bobbin 32 can include two opposing bobbin sections 70 that slide over and encircle each tooth 16 and behind the tooth end from opposing directions, such as from above and below, or from side to side, to form the complete structure of the bobbin 32. The winding section 34 of electrically conducting material is then positioned over the two-piece, or multi-piece, bobbin 32. The winding section 34 can be wound around the bobbin sections 70 or, where the tooth does not include the enlarged tooth end, can be slidably installed on the bobbin sections 70. The bobbin 32 serves to insulate the winding section 34 from the material of the stacks 28 of tooth laminations 30 and the structural rings 24 that form each tooth 16 for the stator 10. In certain aspects of the device, such as where the tooth 16 does not have the enlarged tooth end 108, a single-piece bobbin 32 can be used in place of the multi-part bobbin 32 having the bobbin sections 70. In such an aspect of the device, the pre-wound winding section 34 can also be slidably disposed in the bobbin 32.

Referring again to FIGS. 3-9, during formation of the stator 10, a die 130 in the shape of the finished stator 10 can be used for assembling the various components that make up the stator 10. Within the die, a first outer structural ring 80 can be positioned within a base of a die. Tooth laminations 30 can then be added around the die in the position for each tooth 16 of the stator 10. These tooth laminations 30 can be positioned one at a time for each tooth 16 or multiple tooth laminations 30 formed into a stack 28 can be positioned within each die as the various teeth 16 for the stator 10 are built up within the die. The number of tooth laminations 30 within a stack 28 can vary depending on the design of the stator 10. Typically, the number of tooth laminations 30 stacked between adjacent structural rings 24 will be consistent. This is to ensure that the structural rings 24 are generally parallel through the stator 10. The number of tooth laminations 30 in a particular stack 28 can be within a range of from approximately 3 tooth laminations to approximately 10 tooth laminations; or from between approximately 5 tooth laminations to approximately 8 tooth laminations; or from approximately 2 tooth laminations to approximately 15 tooth laminations.

Referring again to FIG, 9, typically, a sheet of metallic stock is moved over the die. Successively, the structural rings 24 and the tooth laminations 30 are punched out of the sheet of metallic stock and directed into the die. This sheet stock is made of the ferrous metal that forms the stator 10, as described herein. Using the metal stock, the stator 10 is built layer by layer. The structural ring 24 is punched and disposed in the die. Subsequently, successive layers of the punched tooth laminations 30 are directed into the cavity of the die. In addition, with each punched portion of the sheet of metal stock, an alignment protrusion 90 is punched in each lamination that forms one of the teeth 16 for the stator 10. These protrusions 90 operate in a nesting configuration to lock the layers together to structurally support the stator 10. In this manner, the process of stamping the components of the stator 10 and forming these components into the stator 10 is combined into a single operation.

During formation of the stator 10, the assembly includes two punch configurations. One punch operates to form the structural rings 24 from the sheet of metallic stock. Another punch operates to form the layer of tooth laminations 30. As the stator 10 is built up, layer by layer, the appropriate punch is positioned over the die to punch the next layer of the stator 10 into the die. Again, the punched components are directed into the die immediately after being punched.

During this assembly of the stator 10, the layers of tooth laminations 30 are successively punched into the die to form the stacks 28 of tooth laminations 30 for each tooth 16. Accordingly, these stacks 28 of tooth laminations 30 are formed contemporaneously to maintain a consistent height of each tooth 16 during assembly of the stator 10. Stated another way, as the stator 10 is built up, each position of the die receives one tooth lamination 30 from the sheet of metal stock. In certain aspects of the device, multiple sheets can be punched simultaneously such that the same number of tooth laminations 30 are placed in the die. The structural ring 24 is then punched to rest on a predetermined number of tooth laminations 30 for the plurality of teeth 16 so that each structural ring 24 rests evenly on the various stacks 28 of tooth laminations 30. In this manner, as the teeth 16 for the stator 10 are built up, the laminations and the structural rings 24 are allocated evenly among the tooth 16 positions of the die.

Periodically, additional structural rings 24 are positioned over stacks 28 of tooth laminations 30 to reinforce the structure of the stator 10. When the desired height of the stator 10 is achieved, a final outer structural ring 80 is positioned on the stacks 28 of tooth laminations 30 and at the top of the stator 10 to complete the structure of the stator 10. Through this configuration, the stator 10 is formed from a plurality of tooth laminations 30 that are positioned and reinforced through the use of the intermittent structural rings 24 and a pair of outer structural rings 80.

To assist in the assembly of the various tooth laminations 30 and structural rings 24 for the stator 10, each tooth lamination 30 of the various stator teeth 16 and a portion of the structural rings 24 can be punched to form a protrusion 90. Each protrusion 90 forms a nesting configuration with the adjacent tooth laminations 30. This nesting configuration further positions and reinforces the structure of the stator 10. These protrusions 90 can also act as a locating feature for ensuring that the stacks 28 of tooth laminations 30 are properly aligned with respect to the other tooth laminations 30 as well as the structural rings 24 that form the stator 10. Through the use of the protrusions 90, lateral displacement or misalignment of the tooth laminations 30 and the structural rings 24 is largely minimized or eliminated.

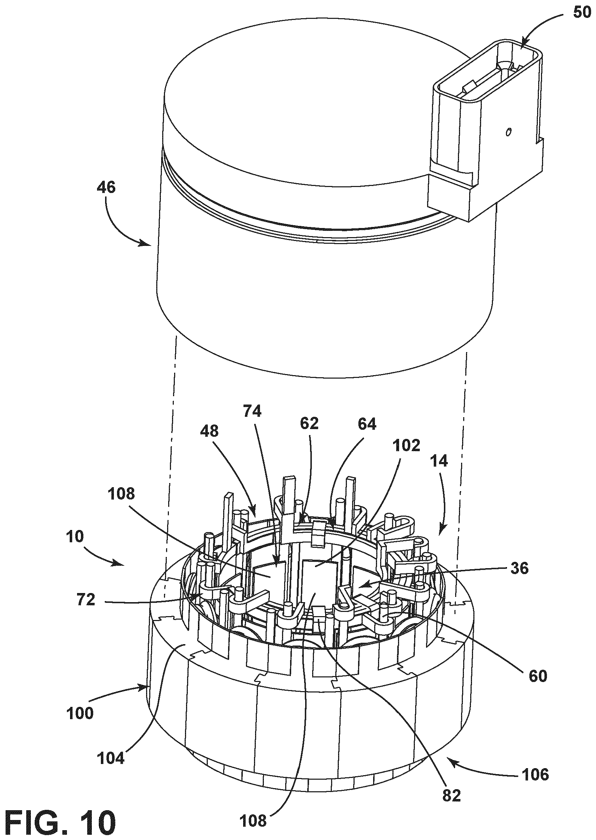

Referring now to FIGS. 10-14, the stator 10 can include a plurality of tooth segments 100. Each tooth segment 100 can be formed from a plurality of tooth laminations 30 that are stacked to form a desired tooth height for the teeth 16 of the stator 10. After the stacked tooth laminations 30 are positioned to form each tooth segment 100, a bobbin 32 is slidably positioned over a tooth portion 102 of the tooth segment 100. A pre-wound tooth winding 14 is then slidably positioned over the bobbin 32 to form a pre-wound stator segment 106.

As discussed herein, the winding section 34 can be placed in the bobbin 32 and the assembled bobbin 32 and winding section 34 can be placed onto the tooth portion 102 of the tooth segment 100 to form a stator segment 106. Each pre-wound stator segment 106 having the pre-attached bobbin 32 and winding section 34 is then coupled to two adjacent pre-wound stator segments 106 to form a stator core 44 with a plurality of pre-wound stator poles 36 that extend inward from the stator core 44. Core portions 104 of the tooth segments 100 include mating geometries that interlock to form the core 44 of the stator 10. The winding sections 34 of each tooth segment 100 are then connected together to form one or more windings 14 of the stator 10. In this manner, a respective winding section 34 of a stator segment 106 is coupled with corresponding winding sections 34 to form a phase of the winding 14 of the plurality of stator segments 106. Typically, the winding 14 has three phases. The phases of the winding 14 and the winding 14 in general defines a plurality of stator poles 36 that are configured to be selectively energized. After the windings 14 are attached together in the desired configuration, an overmold material is disposed over the plurality of stator segments 106 to form an overmold 46 for the stator 10, which is insulated by the overmold 46. In certain aspects of the device, the individual winding sections 34 can be attached together after the overmold 46 is complete. In such a configuration, the wire ends 60 of each winding section 34 can protrude from the overmold 46 and be connected together to form the desired winding configuration.

According to various aspects of the device, the desired winding configuration can be in the form of a single-phase winding 14, a three-phase winding 14, stepper motor 12, or other similar motor configuration. Typically, the winding sections 34 are attached together prior to applying the overmold material that forms the insulated stator 10. As discussed herein the bus ring 48 that is used to attach the winding sections 34 together can be used to define the phase configuration of the winding 14. The bus ring 48 can be in the form of one or more busbars or other similar electrical bracket that is formed into a circular shape to match the profile of the stator 10. The various busbars of the bus ring 48 for dedicated connections with the various winding sections 34 for defining the phases of the windings 14 of the stator 10.

Use of the pre-wound winding sections 34 that are attached to tooth sections 26 of the stator 10 provides for more efficient winding of the desired motor configurations. In particular, the winding configurations described herein can achieve a more efficient fill of the slots 110 that are defined between the teeth 16 of the stator 10. Additionally, the configurations described herein allow for the use of larger gauge wire for the pre-wound winding sections 34. Larger gauged wire can be used since the assembly for winding the stator 10 does not need to weave between a stator core 44 having pre-positioned teeth 16 that may be difficult to navigate around and between. The pre-wound winding sections 34 can be formed into the desired shape and can then be slidably disposed onto a respective tooth 16 of the stator 10 or tooth portion 102 of a tooth segment 100. This pre-assembled configuration of the stator segments 106 allows for the finished winding 14 to occupy more of each slot 110 as room is not needed to accommodate an assembly for weaving the wire for the winding 14 around the teeth 16 of the stator 10.

Additionally, the motor 12 formed through the stator 10 described herein does not require the use of rare earth materials similar to permanent magnet motors. Competitive power density is achieved without the use of permanent magnets. Also, the insulated construction described herein through the use of the insulating overmold 46 allows for exposure to corrosive environments without damage to the components of the stator 10 that are surrounded by the overmold material. Because the stator 10 described herein utilizes higher gauge wire and has an increased fill of the slots 110 between the teeth 16, power density is not lost as compared to other conventional electric motor systems.

According to the various aspects of the device, the configurations of the stator 10 described herein can be used with any one of various rotors 18, including the rotor 18 configurations described herein. Additionally, the disclosure of the rotor 18 having the reluctance voids 122, as described herein, is provided as an exemplary and non-limiting type of rotor 18 that can be used in connection with the stator 10 configurations described herein, as well as other types of stators 10.

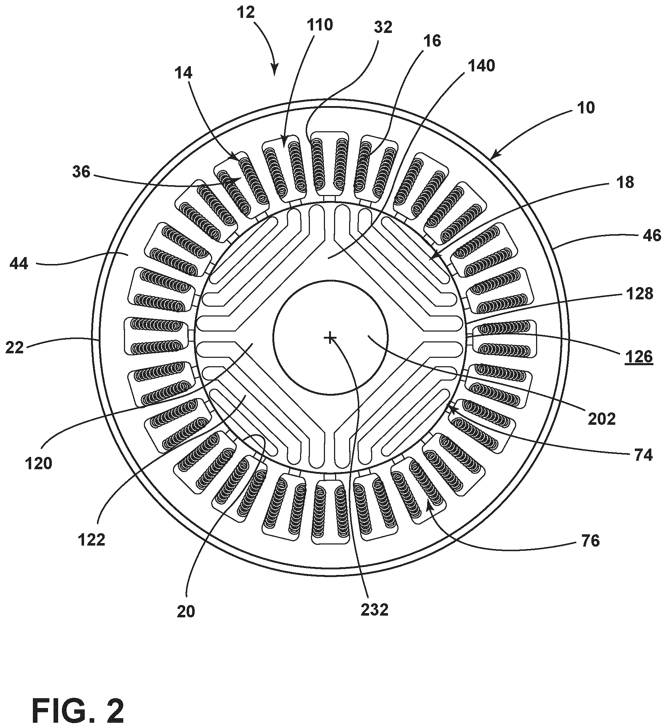

Referring now to FIGS. 2, 15-18, and 22-34, the rotor 18 for the synchronous reluctance motor 12 includes a stack 28 of rotor laminations 120 that are typically made from an electrical grade steel to form a rotor body 140. Reluctance voids 122 are punched from the rotor laminations 120 that form the rotor body 140 of the rotor 18. The reluctance voids 122 can also be punched as part of each rotor lamination 120. A single end lamination 124 can be positioned at each opposing end of the rotor 18 to act as a cover. The opposing end laminations 124 are generally solid within the cross section of the rotor 18 and do not include the reluctance voids 122. The opposing end laminations 124 are installed to prevent windage noise that may otherwise occur if the reluctance voids 122 are exposed. Space is typically provided for a drive member, such as a drive shaft. After placement of the end laminations 124, the rotor 18 is then encapsulated with an overmold material that at least partially encapsulates the outer surface 126 of the rotor 18 to form a rotor overmold 128. Typically, the overmold material is in the form of a non-metallic resin material. The resin may also be in the form of a non-magnetic material, such as resin, a polymer, or other similar overmold materials. Because the ends of the rotor 18 are covered by the end laminations 124, the overmold material is not able to infiltrate into the reluctance voids 122. With the reluctance voids 122 being free of the overmold material, the rotor 18 remains balanced with a consistent thickness of the overmold around the rotor body 140. Infiltration of the overmold material into one or more of the reluctance voids 122 can have the effect of causing an imbalance in the rotor 18 that may result in unwanted vibration or wobbling. Accordingly, the shape and size of the reluctance voids 122 can be maintained throughout the assembly and overmold process of the rotor 18. The use of the overmold around the rotor body 140 also limits the occurrence of corrosion within the rotor laminations 120 and the opposing end laminations 124.

As described herein, the reluctance voids 122 can be maintained as hollow spaces within the rotor body 140. Additionally, magnet inserts 162 can be installed within one or more of the reluctance voids 122. These magnet inserts 162 can partially or fully occupy the space defined by the reluctance voids 122. The presence of the magnet inserts 162 and the size of the magnet inserts 162 relative to the space defined by the reluctance voids 122 can vary as particular magnetic interaction is desired between the electromagnetic field 164 of the charged winding 14 and the rotor 18 for operating the rotor 18 within the stator 10.

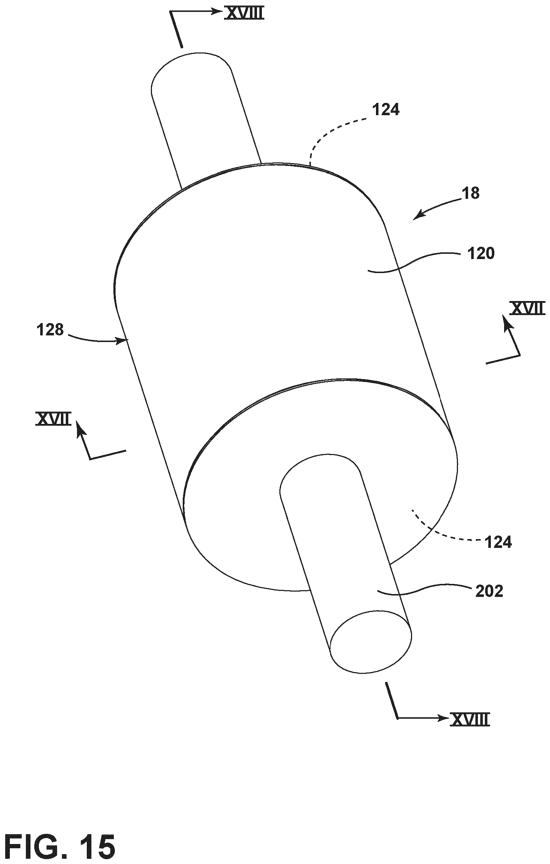

Referring now to FIGS. 15-18, during formation of the rotor 18 having the hollow reluctance voids 122, the connecting webs 150 of the rotor body that define the reluctance voids 122 can be demagnetized, or at least partially demagnetized, to increase the reluctance properties of the rotor 18. Stated another way, demagnetizing the connecting webs 150 decreases the reluctance of the connecting webs 150 to, in turn, provide a more defined path of least reluctance 152 through which the magnetic flux 154 can flow through the rotor 18. This demagnetization of the connecting webs 150 has the effect of making the interaction more effective between the electromagnetic field 164 produced by the stator 10 and the rotor 18. The demagnetization of the rotor can be accomplished through localized heating, such as with a laser or other heat source, or by imparting additional induced mechanical stresses within the rotor body.

Referring still to FIGS. 15-18, during operation of the stator 10 and rotor 18, the controller operates to control the delivery of electrical current to the one or more phases of the winding 14. The controller can also operate in conjunction with a position sensor that monitors the rotational position of the rotor 18 with respect to the stator 10 or the one or more windings 14 of the stator 10. Commutation of the electrical current can be accomplished by electrically energizing the electromagnetic phases of the winding 14 to selectively attract and align the reluctance of the rotor 18 in a desired direction to induce rotation of the rotor 18. Additionally, sensor feedback of the position of the rotor 18 delivered to the controller permits a smooth and controllable electrical current to the windings 14. This, in turn, can be used to control the speed and torque output of the motor 12.

In certain aspects of the device, the controller operates in a sensorless configuration. In an exemplary and non-limiting aspect of the device, a voltage sensor or voltage monitor can be used at the centerpoint of the back Electro-Motive Force (EMF) voltage. This is compared to typically half of the supplied DC bus voltage to calculate the relative inductances for determining the position of the rotor 18 with respect to the phases of the winding 14. When the position of the rotor 18 is known, a smooth and controllable electrical current to the windings 14 can be used to control the speed and torque of the motor 12 without separate position sensing components.

Referring now to FIGS. 1-19, having described various aspects of the stator 10 and rotor 18 for the electric motor 12, a method 400 is disclosed for forming a stator 10 for an electric motor 12. According to the method 400, a step 402 includes placing a bottom outer structural ring 80 within a die. Layers of stacked tooth laminations 30 are then placed onto the bottom outer structural ring 80 (step 404). Intermittent structural rings 24 are placed in an alternating configuration between adjacent layers of stacked tooth laminations 30 (step 406). As discussed herein, the various tooth laminations 30 are positioned in a contemporaneous fashion with respect to each tooth 16 to maintain a consistent height of each tooth 16 for the stator 10 during assembly of the stator 10. A top outer structural ring 80 is then placed on a top layer of the layers of stacked tooth laminations 30 to form the laminated stator 10 (step 408). The laminated stator 10 is then removed from the die (step 410). A bobbin assembly 76 is positioned on each tooth 16 of the laminated stator 10 (step 412). As described herein, the bobbin 32 can be in the form of a single-piece bobbin 32 or a multi-part bobbin 32 that can be assembled over each tooth 16 of the laminated stator 10. The bobbin assembly 76 can include the bobbin 32 and the pre-wound winding section 34 that can be slidably disposed into the tooth 16 as a single assembly. It is contemplated that the bobbin 32 and the winding section 34 can be sequentially disposed onto the tooth 16, in an alternative aspect. With all of the bobbin assemblies 76 installed on the stator teeth 16, the winding sections 34 form a segmented stator winding. The pre-wound winding sections 34 of the segmented stator winding are then attached using the bus ring 48 to form the completed stator winding 14 (step 414). An outer ring 38 is placed around the stator winding 14 and the laminated stator 10 (step 416). This outer ring 38 prevents outward movement of the winding sections 34 along each tooth 16 for the stator 10. The laminated stator 10 and the stator winding 14 are then overmolded with an overmold material (step 418). As described herein, the use of pre-wound winding sections 34 provides for greater slot fill and also provides for the use of larger gauge wire that can produce more effective electromagnetic field when energized with an electrical current.

As part of the method 400 for forming the stator 10, the structural rings 24 and the tooth laminations 30 can be made to be less magnetic. By way of example and not limitation, the thin sections, such as the connecting portions of the structural rings 24, can be metallurgically changed to be less magnetic. This is typically performed through heating the steel, such as through use of a laser. In certain aspects of the device, the connecting portions of the structural rings 24 can be upset using a laser or through mechanical de-bridging means to diminish or eliminate the magnetic effect that may be produced by the presence of the connecting portions. It is contemplated that only a portion of the connecting portion are upset or removed to provide structure to the stator 10.

Referring now to FIGS. 1-18 and 20, having described various aspects of the electric motor 12, a method 500 is disclosed for forming a stator 10 for the electric motor 12. According to the method 500, laminated tooth sections 26 are formed (step 502). A bobbin 32 is placed onto a tooth portion 102 of each of the laminated tooth segment 100 (step 504). The pre-wound winding section 34 is then placed on the tooth portion 102 of each laminated tooth segment 100 and over the respective bobbin 32 (step 506). The laminated tooth segments 100 having the pre-wound winding section 34 are then attached together to form a circular core 44 of the stator 10 (step 508). The pre-wound winding sections 34 are then attached together to form the desired configuration of winding 14 for the stator 10 (step 510). The core 44, the teeth 16 and the windings 14 are then overmolded using an overmold material (step 512).

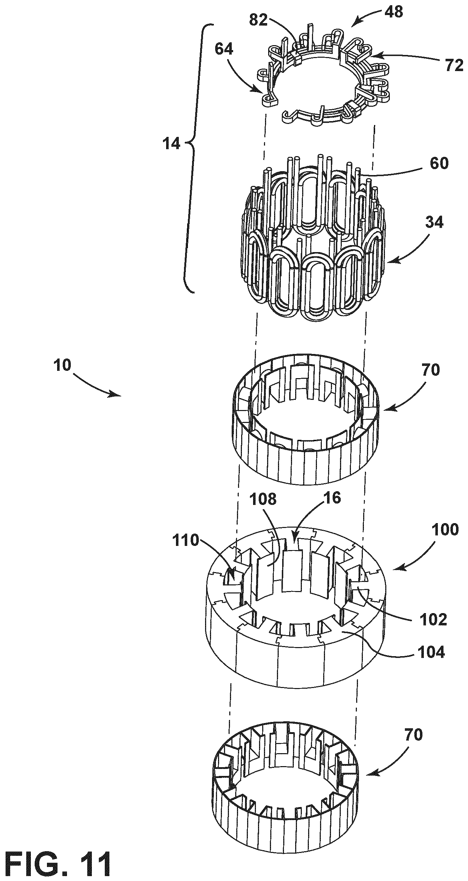

Typically, use of the laminated winding sections 34 that are pre-wound and then attached together is utilized in an inner-rotor configuration that is generally exemplified in FIGS. 11-18. The star configuration of the structural rings 24 for the stator 10, exemplified in FIG. 4, can be used in an inner-rotor configuration or an outer-rotor configuration depending upon the design of the motor 12.

Referring now to FIGS. 1-18 and 21, having described various aspects of the device, a method 600 is disclosed for forming a rotor 18 for an electric motor 12. According to the method 600, steel rotor laminations 120 are formed having sections removed from each of the rotor laminations 120 to form reluctance voids 122 (step 602). The rotor laminations 120 are stacked to form the structure of the rotor 18 (step 604). The sections of the rotor laminations that are removed are arranged or otherwise aligned to define reluctance voids 122 within the rotor 18. Opposing end laminations 124 or end caps are then disposed on ends of the rotor 18 to enclose the reluctance voids 122 (step 606). As discussed herein, closure of the reluctance voids 122 prevents infiltration of overmold material from entering into and occupying the reluctance voids 122. The rotor 18 is then overmolded with an overmold material (step 608). The opposing end laminations 124, as described herein, prevent infiltration of the overmold material into the reluctance voids 122. This infiltration of overmold material can negatively affect the operation and efficiency of the reluctance voids 122 when operated in conjunction with the energized windings 14 of the stator 10.

The assembly methods described herein for the synchronous reluctance motor 12 allow for bobbin winding of the motor assembly that offers additional and more efficient fill of the slots 110 for the stator 10. The configurations described herein also allow for more efficient use and easier winding of heavier gauge wire and improved slot fill over conventional needle-wound stators 10. Overmolding of the stator 10 and overmolding of the rotor 18 allows for the motor 12 to be exposed to corrosive fluids without corroding the ferrous stator 10 or the ferrous rotor 18. Additionally, as described herein, closing each end of the stack 28 of rotor laminations 120 before overmolding prevents the injection molded non-metallic resin material from flowing into the reluctance voids 122. This infiltration can cause potential rotor imbalance. The use of overmolding with respect to the rotor 18 provides a smooth overmold surface that lowers windage noise that can be caused from voids 122 in the rotor 18 as well as an elimination of "paddle" resistance within wet rotor designs, especially where the voids 122 are exposed to the fluids that may cause increased drag on the rotor 18 as it rotates with a wet-rotor setting.

Additionally, when the non-metallic resin material is overmolded to surround the stator 10 and the windings 14, the overmold material is configured to at least partially encapsulate the inner diameter of the stator teeth 16. As described herein, this configuration provides for use of the stator 10 within liquid and corrosive environments. Use of the overmold 46 at the inner diameter of the stator teeth 16 prevents these materials from corroding or otherwise damaging the laminations of the stator 10.

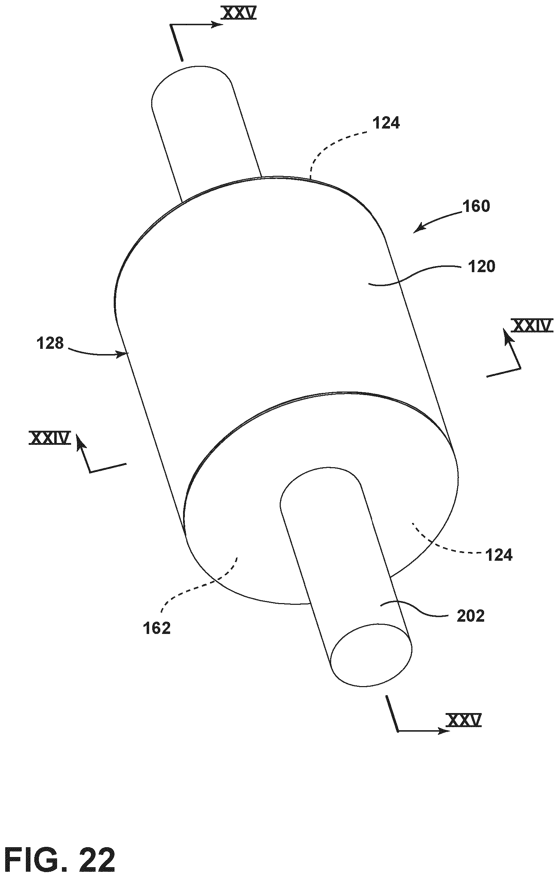

Referring now to FIGS. 22-34, the electric motor 12 can include a stator 10 having one or more windings 14 that when selectively energized produces an electromagnetic field 164 within a rotor cavity 74. A ferrite-assisted reluctance rotor 160 is disposed within the rotor cavity 74 of the stator 10. This ferrite-assisted reluctance rotor 160 is in electromagnetic communication with the windings 14 and the electromagnetic field 164 produced thereby. The ferrite-assisted reluctance rotor 160 can include a drive shaft 202 and a rotor body 140 that extends around the drive shaft 202. The rotor body 140 can define the plurality of reluctance voids 122. Magnet inserts 162 can be positioned within the reluctance voids 122. The magnet inserts 162 occupy at least a portion of the space defined by the reluctance voids 122. The magnet inserts 162 and reluctance voids 122 cooperate with the electromagnetic field 164 to produce an electromagnetic torque 170.

Referring again to FIGS. 22-34, the electromagnetic torque 170 produced by the ferrite-assisted reluctance rotor 160 includes the magnetic torque components 172 that is defined by electromagnetic interaction between the electromagnetic field 164 and the magnet inserts 162. In addition, the electromagnetic torque 170 includes the reluctance torque component 174 that is defined by an electromagnetic interaction between connecting webs 150 that define the reluctance voids 122 and the electromagnetic field 164. As described herein, the connecting webs 150 define the path of least reluctance 152 through which the magnetic flux 154 tends to travel, and, in turn, align the flux path with the electromagnetic field 164 to generate the reluctance torque component 174 of the electromagnetic torque 170. The combination of this magnetic torque component 172 and the reluctance torque component 174, taken together, produce the entire electromagnetic torque 170 of the rotor 18.

According to the various aspects of the device, the reluctance torque component 174 can be within a range of from approximately 20% to approximately 60% of the entire electromagnetic torque 170. It is also contemplated that the reluctance torque component 174 can be from approximately 30% to approximately 50% of the entire electromagnetic torque 170. It is further contemplated that the reluctance torque component 174 can be approximately 40% of the entire electromagnetic torque 170. It should be understood that the ranges of the ratio of the reluctance torque component 174 and the magnetic torque component 172 can be achieved through various configurations of the reluctance voids 122 and the magnet inserts 162, as will be described more fully herein.

Using the combination of the reluctance voids 122 and the magnet inserts 162, the ferrite-assisted reluctance rotor 160 produces a hybrid torque configuration that includes both the reluctance torque component 174 and the magnetic torque component 172. Using this configuration, the magnet inserts 162 can be made of a range of magnetic material, other than rare-earth magnets, and still produce an electromagnetic torque 170 that is similar in performance to conventional brushless DC (BLDC) electric motors 12 using rare-earth magnets. In this manner, the hybrid ferrite-assisted reluctance rotor 160 described herein produces similar electromagnetic torque 170, using magnets having a lower magnetic output, as compared to conventional motors that use more expensive rare-earth magnets that have a greater magnetic output. The use of the magnet inserts 162, in part, is used to produce a back electromagnetic force (Back EMF). As described herein, by creating the Back EMF within the motor 12, a sensorless control can be implemented for monitoring the rotational position of the rotor 18 with respect to the stator 10 and the electromagnetic field 164. Accordingly, the lower output magnet inserts 162 are effective at producing the desired magnetic torque component 172, while also generating the Back EMF needed for the sensorless control. These advantages of the motor 12 described herein are achieved by using relatively low cost materials for the magnet inserts 162.

In addition, to achieve these advantages of the motor 12 described herein, the magnet inserts 162 can be designed and installed to occupy only a portion of the reluctance voids 122. Also, for the reluctance voids 122 that do include a magnet insert 162, the magnet insert 162 may only occupy a portion of the space defined by the reluctance void 122. Accordingly, the reluctance voids 122 typically contain a combination of air and the magnet inserts 162.

According to the various aspects of the device, as exemplified in FIGS. 15-18 and 23-28, the reluctance voids 122 can be positioned in a two-pole configuration. In this configuration, the reluctance voids 122 are oriented in a generally parallel configuration with respect to a central plane 220 of the rotor body 140. The reluctance voids 122 can include enlarged outer sections 222 of the reluctance voids 122. A central section 224 of the reluctance voids 122 can include an arcuate section 226 that extends congruently about the drive shaft 202 of the rotor 18. In this manner, the generally parallel configuration extends along the central plane 220 of the rotor body 140. These reluctance voids 122 in the generally parallel configuration can be linear and parallel with one another. The reluctance voids 122 in the generally parallel configuration may also include undulations 230 that conform to the geometry of the rotor body 140 and the drive shaft 202. In this manner, the central plane 220 of the rotor body 140 that extends along the central axis 232 of the two-pole configuration is accentuated to define the path of least reluctance 152 for defining the reluctance torque component 174 or the electromagnetic torque 170 of the motor 12. Additionally, in areas where the reluctance voids 122 are larger, such as proximate the enlarged outer sections 222, the connecting webs 150 have a smaller thickness. This smaller thickness can be used to more precisely define the paths of least reluctance that can interact with the stator poles 36 of the stator 10 and the aspects of the electromagnetic field 164. This configuration can be used to provide greater resolution of the ferrite-assisted reluctance rotor 160 as the rotor 18 operates within the stator 10.

Studies of the disclosed device have shown that this comparable output between the hybrid ferrite-assisted reluctance rotor 160 described herein and conventional BLDC rotors 18 can be achieved through a comparable electrical input. Accordingly, the overall system utilizing the hybrid ferrite-assisted reluctance rotor 160 provides greater efficiency and produces electromagnetic torque 170 using less costly magnetic material having a lesser magnetic output.

According to various aspects of the device, as exemplified in FIGS. 22-34, the ferrite-assisted reluctance rotor 160 achieves similar performance, with respect to electromagnetic torque 170, as compared to conventional BLDC motors that utilize more costly rare-earth magnets. In addition, the inclusion of the magnet inserts 162 within the ferrite-assisted reluctance rotor 160 produces the Back EMF. The generation of Back EMF by the magnet inserts 162 allows the ferrite-assisted reluctance rotor 160 to be used in combination with a sensorless configuration of electric motors 12. Conventional reluctance rotors 18 require a sensor to determine the rotational position of the rotor 18 within the rotor cavity 74 at any particular time. Again, the inclusion of the magnet inserts 162 within the ferrite-assisted reluctance rotor 160 produces the Back EMF to provide for a sensorless operation of the ferrite-assisted reluctance rotor 160.

According to various aspects of the device, the air gap 180 defined between the outer surface 126 of the rotor 18 and the inner surface of the stator 10 may increase in the ferrite-assisted reluctance rotor 160. The inclusion of the magnetic torque component 172 of the electromagnetic torque 170, in combination with the reluctance torque components 174 of the electromagnetic torque 170, can provide for a greater tolerance in the air gap 180 thickness. This increased tolerance can provide for an increased air gap 180, as compared to conventional reluctance rotors 18. This may also serve to decrease the noise produced by the ferrite-assisted reluctance rotor 160 due to the wider tolerance and air gap 180 between the ferrite-assisted reluctance rotor 160 and stator 10. At the same time, the configuration of the enlarged outer sections 222 of the reluctance voids 122, and, where present, the magnet inserts 162, assists in providing this greater resolution of the ferrite-assisted reluctance rotor 160 with respect to the stator poles 36.

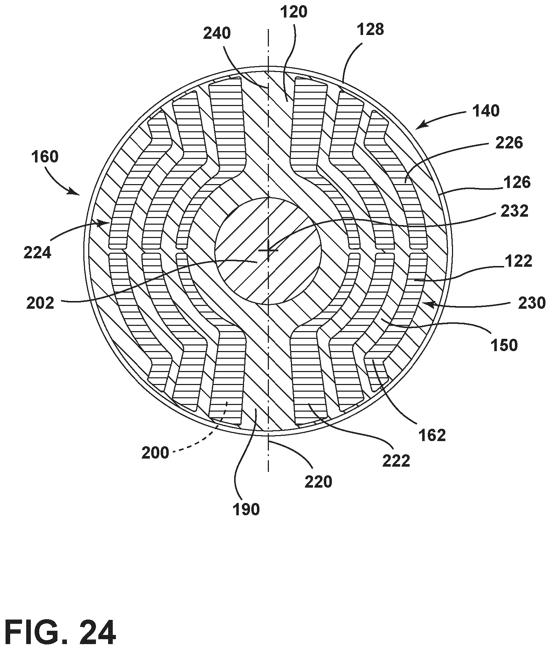

According to various aspects of the device, as exemplified in FIGS. 24-34, the magnet inserts 162 can occupy a portion of the reluctance voids 122 or can occupy the entirety of the reluctance voids 122. Various ratios of air space within the reluctance voids 122 as compared to the space occupied by the magnet inserts 162 can achieve varying ranges of electromagnetic torque 170 and different ratios of the reluctance torque component 174 and the magnetic torque component 172. Additionally, placement of the magnet inserts 162 within the enlarged outer section 222 and/or the arcuate section 226 of the two-pole configuration of the rotor 18 can also be used to adjust the ratio of the reluctance torque component 174 and the magnetic torque component 172.

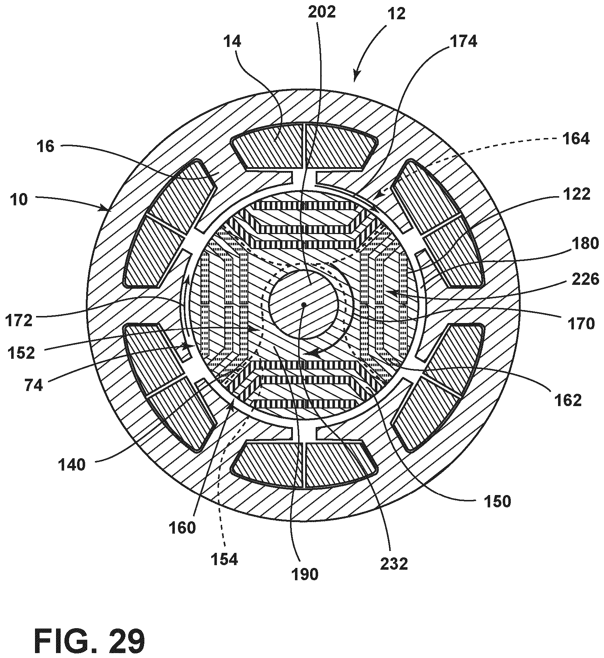

As described herein, the reluctance voids 122 of the ferrite-assisted reluctance rotor 160 can be positioned in the two-pole configuration (exemplified in FIGS. 24-28), a four-pole configuration (exemplified in FIGS. 29-34), and other pole configurations within the ferrite-assisted reluctance rotor 160. The configuration of the reluctance voids 122 and the magnet inserts 162 of the ferrite-assisted reluctance rotor 160 can vary depending upon the design of the stator 10, the stator windings 14, and other components of the electric motor 12. As described herein, the reluctance voids 122 and the magnet inserts 162 cooperate to define a plurality of rotor poles that can be manufactured in a variety of configurations. The two-pole configuration, as described herein, can include a generally parallel configuration of the reluctance voids 122. The generally parallel configuration of the reluctance voids 122 tends to align with a central plane 220 of the rotor body 140. This central plane 220 tends to align with an axis of symmetry 240 of the reluctance voids 122. The four-pole configuration of the reluctance voids 122 tends to define a series of arcuate sections 226 that extend in a symmetrical and non-concentric configuration about a central axis 232 of the drive shaft 228 of the rotor 18.

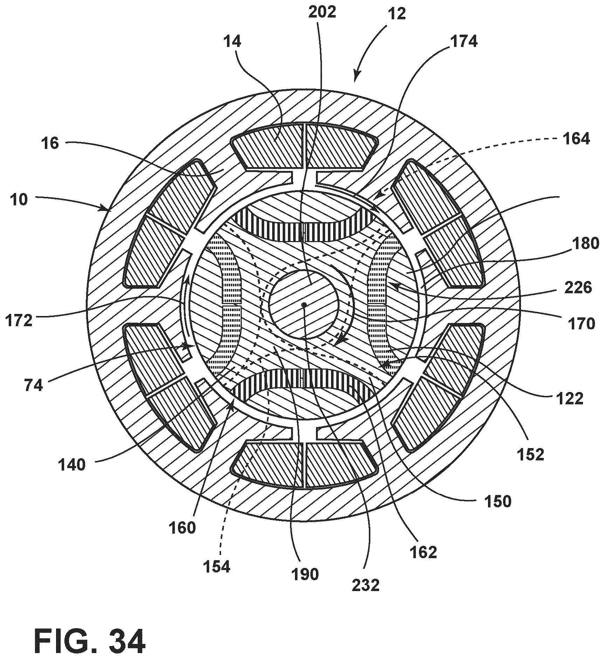

According to various aspects of the device, the magnetic poles that are formed within the hybrid ferrite-assisted reluctance rotor 160 can be made up of a plurality of magnet inserts 162 that are positioned within a plurality of corresponding reluctance voids 122. It is also contemplated that each magnet pole of the plurality of magnet poles can include a single magnet insert 162 that is positioned within a corresponding reluctance void 122 (as shown in FIG. 34).

Referring again to FIGS. 22-34, the rotor body 140 includes a plurality of stacked rotor laminations 120. Each lamination of the plurality of stacked rotor laminations 120 includes connecting webs 150 that align to form the reluctance voids 122. Stated another way, when configured as the plurality of stacked rotor laminations 120, the connecting webs 150 of each rotor lamination 120 align with one another to form reluctance voids 122 that extend substantially through the rotor body 140, or entirely through the rotor body 140.

It should be understood that use of the term substantially through the rotor body 140 in this context indicates that at least one end of the rotor body 140 defines apertures that provide access into the reluctance voids 122 for disposing the magnet inserts 162 into the reluctance voids 122. The reluctance voids 122 may extend the majority of the distance through the rotor body 140 or may extend through the majority of the stacked rotor laminations 120. In certain aspects of the device, the ferrite-assisted reluctance rotor 160 may include reluctance voids 122 that are accessible from each end of the rotor body 140, or may be accessible from only one end of the rotor body 140. Still further, the rotor body 140 may have a first set of reluctance voids 122 that are accessible from one end of the rotor body 140 and a second set of reluctance voids 122 that are accessible from an opposing end of the rotor body 140.

The magnet inserts 162 of the ferrite-assisted reluctance rotor 160 can be made of various magnetic materials that are typically in the form of Aluminum Nickel Cobalt (AlNiCo) magnets, ferrite magnets, and other similar magnets. Typically, the magnet inserts 162 are free of rare-earth magnets. As discussed herein, the configuration of the ferrite-assisted reluctance rotor 160 achieves a comparable electromagnetic torque 170 without the need for using rare-earth magnets. Accordingly, the ferrite-assisted reluctance rotor 160 can be manufactured while using non-rare-earth magnets to achieve a comparable electromagnetic torque 170.

To contain the magnet inserts 162 within the rotor body 140, opposing end laminations 124 can be positioned at opposing ends of the rotor body 140 to close off the reluctance voids 122. The opposing end laminations 124 are configured to reduce windage noise during operation of the rotor 18 within the rotor cavity 74. This is particularly true where the magnet inserts 162 occupy only a portion of the reluctance voids 122 within the rotor body 140 and empty space exits within the reluctance voids 122. Additionally, the end laminations 124 provide closure of the reluctance voids 122 such that the overmold material of the rotor overmold 128 disposed around the rotor body 140 does not infiltrate into the reluctance voids 122 during manufacture of the ferrite-assisted reluctance rotor 160.

According to the various aspects of the device, the ferrite-assisted reluctance rotor 160 that includes the reluctance voids 122 as well as the magnet inserts 162 provides for a hybrid operation of the ferrite-assisted reluctance rotor 160 with respect to an electromagnetic field 164 produced by an energized winding 14 of the stator 10. The reluctance portion 190 of the ferrite-assisted reluctance rotor 160 that extends around the reluctance voids 122 produces the reluctance path around the reluctance voids 122 and through the rotor body 140. The rotor 18 tends to align with the electromagnetic field 164 to produce a path of least reluctance 152 such that a reluctance path of the ferrite-assisted reluctance rotor 160 tends toward an aligned orientation with respect to the electromagnetic field 164 of the stator 10. Contemporaneously, the magnet inserts 162 that are disposed within the reluctance voids 122 provide for a separate interaction with the electromagnetic field 164 of the stator 10. In this manner, the magnetic field of the respective magnet inserts 162 tends toward an aligned orientation with respect to the electromagnetic field 164 of the energized portion of the winding 14 of the stator 10. The path of least reluctance 152 and the magnetic fields of the magnet inserts 162 are at different radial positions with respect to the ferrite-assisted reluctance rotor 160. Accordingly, the magnetic fields of the magnet inserts 162 and the paths of least reluctance 152, also referred to herein as the reluctance portions 190 of the rotor body 140 each tend to align, separately, but in cooperation, with an energized portion of the winding 14 for the stator 10. This provides for numerous electromagnetic interactions between the ferrite-assisted reluctance rotor 160 and the stator 10 to produce the hybrid electromagnetic torque 170.

Again, as discussed herein, the electromagnetic torque 170 is made up of the reluctance torque components 174 that occurs by the tendency for the reluctance portions 190, or the paths of least reluctance 152, of the ferrite-assisted reluctance rotor 160 to align with the electromagnetic field 164 of the winding 14 for the stator 10. Additionally, the magnetic torque components 172 operates where the magnetic fields of the magnet inserts 162 tend to align with the electromagnetic field 164 of the winding 14 for the stator 10. These torque components combined produce the electromagnetic torque 170 that allows the rotor 18 to achieve a similar torque output as compared to conventional BLDC motors utilizing rare-earth magnets.

According to various aspects of the device, as exemplified in FIGS. 22-34, the ferrite-assisted rotor for an electric motor 12 can include the drive shaft 202, the plurality of stacked rotor laminations 120 that form the rotor body 140. The rotor body 140 extends around the drive shaft 202. Each rotor lamination 120 of the plurality of stacked rotor laminations 120 includes connecting webs 150 that form reluctance voids 122 within the plurality of stacked rotor laminations 120. The magnet inserts 162 are disposed within the reluctance voids 122. The magnet inserts 162 occupy at least a portion of the space defined by the reluctance voids 122. The magnet inserts 162 and the reluctance voids 122 are configured to cooperate with the electromagnetic field 164 generated by the energized winding 14 for a stator 10. This interaction produces an electromagnetic torque 170 having the reluctance torque components 174 and the magnetic torque components 172.

Within conventional reluctance motors, the reluctance rotor is typically much longer than the stator to provide for a greater interaction between the paths of least reluctance within the rotor body.

According to the various aspects of the device, as exemplified in FIGS. 22-34, the inclusion of the magnet inserts 162 have been shown to provide a consistent and comparable electromagnetic torque 170 with the ferrite-assisted reluctance rotor 160 having a rotor body 140 that is substantially similar or equal to the height of the rotor cavity 74 of the stator 10. Accordingly, using the ferrite-assisted reluctance rotor 160, the motor 12 can be made more compact than other conventional reluctance motors. Again, this comparable electromagnetic torque 170 can be achieved without the need for rare-earth magnets. Rather, the ferrite-assisted reluctance rotor 160 described herein can utilize non-rare-earth magnet inserts 162 within the reluctance voids 122 to produce a comparable electromagnetic torque 170.

Referring now to FIGS. 22-35, having described various aspects of the ferrite-assisted reluctance rotor 160, a method 700 for forming a rotor 18 for an electric motor 12 is disclosed. According to the method 700, step 702 includes forming rotor laminations 120 having reluctance blanks 200 or sections removed from each of the rotor laminations 120. These reluctance blanks 200 or sections also define the connecting webs 150 that extend around each of the removed reluctance blanks 200. After the laminations are formed, the rotor laminations 120 are stacked to form the rotor body 140 that is made up of the plurality of stacked rotor laminations 120 (step 704). As discussed herein, the connecting webs 150 of the reluctance portions 190 for each of the laminations are aligned to define the reluctance voids 122 that extend through or extend substantially through the rotor body 140. After the plurality of stacked rotor laminations 120 are positioned to form the rotor body 140, and the reluctance voids 122 are defined therein, magnet inserts 162 are positioned within the reluctance voids 122 (step 706). In order to maintain the magnet inserts 162 within the reluctance voids 122, at least one, and typically two, opposing end caps 70 are disposed on the rotor body 140 for enclosing the reluctance voids 122 and any space that may be unoccupied by the magnet inserts 162 within the reluctance voids 122 (step 708). Typically, the entire space defined by the reluctance voids 122 are occupied by the magnet inserts 162 such that little to no space is left over. It is contemplated that the opposing end caps 70 are disposed on the ends of the rotor body 140 to prevent movement of the magnet inserts 162 during operation of the ferrite-assisted reluctance rotor 160 and during placement of the overmold 46 around the rotor body 140 and the magnet inserts 162. After disposing the magnet inserts 162 within the rotor body 140, the rotor body 140 is overmolded with an overmold material (step 710). As discussed herein, the opposing end caps 70 prevent infiltration of the overmold material into the reluctance voids 122 and also prevents movement of the magnet inserts 162 within the reluctance voids 122.

According to an aspect of the present disclosure, a motor includes a stator having a winding that when selectively energized produces an electromagnetic field within a rotor cavity, and a rotor disposed within the rotor cavity of the stator and in electromagnetic communication with the winding and the electromagnetic field. The rotor includes a drive shaft, a rotor body that extends around the drive shaft and that defines a plurality of reluctance voids, and magnet inserts that are disposed within the reluctance voids. The magnet inserts occupy at least a portion of a space defined by the reluctance voids. The magnet inserts and the reluctance voids cooperate with the electromagnetic field to produce an electromagnetic torque.

According to another aspect, the magnet inserts are free of rare-earth magnets.

According to another aspect, the magnet inserts are at least one of Aluminum Nickel Cobalt (AlNiCo) magnets and ferrite magnets.

According to another aspect, the stator and the rotor are free of position sensors for sensing a rotational position of the rotor relative to the stator.

According to another aspect, the rotational position of the rotor relative to the stator is estimated using a back electromotive force that is generated by the magnet inserts.

According to another aspect, the electromagnetic torque includes a magnetic torque component that is produced by an interaction of the magnet inserts and the electromagnetic field.

According to another aspect, the electromagnetic torque includes a reluctance torque component that is produced by the interaction of the rotor body and the electromagnetic field.

According to another aspect, the rotor body includes connecting webs that define the reluctance voids.

According to another aspect, the reluctance torque component of the electromagnetic torque is produced by the interaction of the connecting webs of the rotor body and the electromagnetic field.

According to another aspect, at least one magnet insert of the magnet inserts occupies only a portion of the space of a corresponding reluctance void of the reluctance voids.

According to another aspect, opposing end laminations and an overmold layer enclose the reluctance voids of the rotor and fix a position of the magnet inserts within the reluctance voids.

According to another aspect of the present disclosure, a rotor includes a drive shaft and a plurality of stacked rotor laminations that form a rotor body. The rotor body extends around the drive shaft. Each stacked rotor lamination has connecting webs that form reluctance voids within the plurality of stacked rotor laminations. The rotor further includes magnet inserts that are disposed within the reluctance voids. The magnet inserts occupy at least a portion of a space defined by the reluctance voids. The magnet inserts and the reluctance voids are configured to cooperate with an electromagnetic field from a stator winding to produce an electromagnetic torque having a reluctance torque component and a magnetic torque component.

According to another aspect, each magnet insert occupies only a portion of a respective reluctance void of the reluctance voids.

According to another aspect, the rotor includes a two-pole configuration, and the reluctance voids are positioned in a generally parallel configuration with respect to a central plane of the rotor body.

According to another aspect, the magnet inserts include at least 4 magnet inserts that are positioned in the generally parallel configuration.

According to another aspect, the rotor includes a four-pole configuration, and the reluctance voids are positioned in a non-concentric configuration with respect to a rotational axis of the rotor body.

According to another aspect, the magnet inserts are free of rare-earth magnets.

According to another aspect, the magnet inserts are at least one of Aluminum Nickel Cobalt (AlNiCo) magnets and ferrite magnets.

According to yet another aspect of the present disclosure, a method for forming a rotor for an electric motor includes the steps of forming rotor laminations having reluctance portions removed from each of the rotor laminations to define connecting webs, stacking the rotor laminations to form a rotor body, wherein the connecting webs are aligned to define reluctance voids within the rotor body, positioning magnet inserts within the reluctance voids, disposing opposing end caps on the rotor body to enclose the reluctance voids, and overmolding the rotor body with an overmold material. The opposing end caps prevent infiltration of the overmold material into the reluctance voids.

According to another aspect, the step of forming the rotor laminations includes stamping out the reluctance blanks to form at least 6 reluctance voids that are positioned in a generally parallel configuration with respect to the rotor body.

It is to be understood that variations and modifications can be made on the aforementioned structure without departing from the concepts of the present invention, and further it is to be understood that such concepts are intended to be covered by the following claims unless these claims by their language expressly state otherwise.

## Claims

1. A motor (12) comprising:
a stator (10) having a winding (14) that when selectively energized produces an electromagnetic field (164) within a rotor cavity (74); and
a rotor (18) disposed within the rotor cavity (74) of the stator (10) and in electromagnetic communication with the winding (14) and the electromagnetic field (164), the rotor (18) comprising:
a drive shaft (228);
a rotor body (140) that extends around the drive shaft (228), the rotor body (140) defining reluctance voids (122); and
magnet inserts (162) that are disposed within the reluctance voids (122), wherein the magnet inserts (162) occupy at least a portion of a space defined by the reluctance voids (122), wherein the magnet inserts (162) and the reluctance voids (122) cooperate with the electromagnetic field (164) to produce an electromagnetic torque (170).

2. The motor (12) of claim 1, wherein the magnet inserts (162) are free of rare-earth magnets.

3. The motor (12) of any one of claims 1-2, wherein the magnet inserts (162) are at least one of Aluminum Nickel Cobalt (AlNiCo) magnets and ferrite magnets.

4. The motor (12) of any one of claims 1-3, wherein the stator (10) and the rotor (18) are free of position sensors for sensing a rotational position of the rotor (18) relative to the stator (10).

5. The motor (12) of claim 4, wherein the rotational position of the rotor (18) relative to the stator (10) is estimated using a back electromotive force that is generated by the magnet inserts (162).

6. The motor (12) of any one of claims 1-5, wherein the electromagnetic torque (170) includes a magnetic torque component (172) that is produced by an interaction of the magnet inserts (162) and the electromagnetic field (164).

7. The motor (12) of claim 6, wherein the electromagnetic torque (170) includes a reluctance torque component (174) that is produced by the interaction of the rotor body (140) and the electromagnetic field (164).

8. The motor (12) of claim 7, wherein the rotor body (140) includes connecting webs (150) that define the reluctance voids (122).

9. The motor (12) of claim 8, wherein the reluctance torque component (174) of the electromagnetic torque (170) is produced by the interaction of the connecting webs (150) of the rotor body (140) and the electromagnetic field (164).

10. The motor (12) of any one of claims 1-9, wherein at least one magnet insert (162) of the magnet inserts (162) occupies only a portion of the space of a corresponding reluctance void (122) of the reluctance voids (122).

11. The motor (12) of any one of claims 1-10, wherein opposing end laminations (124) and an overmold layer enclose the reluctance voids (122) of the rotor (18) and fix a position of the magnet inserts (162) within the reluctance voids (122).

12. The motor (12) of any one of claims 1-11, wherein the rotor (18) includes a two-pole configuration, and wherein the reluctance voids (122) are positioned in a generally parallel configuration with respect to a central plane (220) of the rotor body (140).

13. The motor (12) of claim 12, wherein the magnet inserts (162) include at least 4 magnet inserts (162) that are positioned in the generally parallel configuration.

14. The motor (12) of any one of claims 1-11, wherein the rotor (18) includes a four-pole configuration, and wherein the reluctance voids (122) are positioned in a non-concentric configuration with respect to a rotational axis (232) of the rotor body (140).

15. A method for forming the motor (12) of claim 1, the method comprising the steps of:
forming rotor laminations (120) having reluctance blanks (200) removed from each of the rotor laminations (120) to define connecting webs (150);
stacking the rotor laminations (120) to form the rotor body (140), wherein the connecting webs (150) are aligned to define the reluctance voids (122) within the rotor body (140);
positioning the magnet inserts (162) within the reluctance voids (122);
disposing opposing end laminations (124) on the rotor body (140) to enclose the reluctance voids (122); and
overmolding the rotor body (140) with an overmold material, wherein the opposing end laminations (124) prevent infiltration of the overmold material into the reluctance voids (122).
